# EUROPÄISCHE PATENTANMELDUNG

(11) **EP 3 489 560 A1**
(43) Veröffentlichungstag der Anmeldung: **29.05.2019**
(21) Anmeldenummer: 18205942.8
(22) Anmeldetag: 13.11.2018
(51) Int. Cl.: F16K 37/00, F16K 31/524, A47J 31/46

(54) **VENTILANORDNUNG MIT ZUSTANDSERKENNUNG**

(30) Priorität: 27.11.2017 DE 102017221228
(71) Anmelder: BSH Hausgeräte GmbH, 81739 München (DE)
(72) Erfinder: Grimme, Thomas, 83512 Wasserburg (DE); Steffl, Michael, 83250 Marquartstein (DE); Einsiedler, Thomas, 83278 Traunstein (DE)

(57) **Zusammenfassung**

Die Erfindung betrifft eine Ventilanordnung umfassend mindestens ein ein Ventil mit einem Ventilgehäuse (1), in dem ein Führungskanal (1b) ausgebildet ist und einem in dem Führungskanal (1b) längs geführten Stößel (7), und einem Aktor (5; 6) zur Auslenkung der Stößel (7), der an einem ersten Ende des Stößels (7) angreift, so dass sich ein stirnseitiger Abschnitt (7a) an einem gegenüberliegenden zweiten Ende des Stößels (7) in einem Bewegungsbereich (9) des Führungskanals (1b) hin und her bewegen kann, dadurch gekennzeichnet, dass die Ventilanordnung eine Messeinheit (3a) mit einem kapazitiven und/oder induktiven Sensor (3) umfasst, welche an dem Bewegungsbereich (9) angeordnet ist, so dass bei einer Bewegung des Stößels (7) dessen stirnseitiger Abschnitt (7a) im Bewegungsbereich (9) in den sensitiven Bereich des Sensors (3) eindringt und dadurch in dem Sensor (3) ein Signal erzeugt. Die Erfindung betrifft des Weiteren ein Messverfahren zur Messung des Fluiddrucks mit einem solchen Ventil und einen Getränkeautomaten.

## Beschreibung

Die Erfindung betrifft eine Ventilanordnung mit einer Zustandserkennung der Stellung der Ventile.

Bei dem Einsatz von Ventilen in einer Ventilanordnung ist es von Vorteil, deren Zustand zu kennen. Mögliche detektierbare Zustände sind z.B. ob das jeweilige Ventil geöffnet, geschlossen oder in einem Zustand des Übergangs bzw. einem Fehlzustand ist. Dies wird in der Regel mittels einer Erkennung der Position oder Winkel der beweglichen Teile des Ventils erreicht. Diese Positionserkennung wird auch als "Zustandserkennung" bezeichnet.

Die DE 10 2015 003 095 A1 beschreibt ein Rückschlagventil mit einem Stößel, der in einem Ventilgehäuse längsverfahrbar geführt ist und der entgegen der Wirkung eines Energiespeichers, insbesondere einer Druckfeder, in verschiedenen Schaltstellungen den fluidführenden Weg zwischen zwei Anschlussstellen im Ventilgehäuse freigibt oder voneinander sperrt, wobei mittels einer Überwachungseinrichtung die einzelnen Schaltstellungen des Stößels im Ventilgehäuse überwacht sind. Die Überwachungseinrichtung kann eine Messspulenanordnung oder ein Hall-Sensor sein und ist als Endlagenschalter konzipiert. Der Einsatz, eine Überprüfung oder ein Austausch der Sensoren ist allerdings aufwändig und teuer.

Aufgabe der vorliegenden Erfindung war es, die Nachteile des Standes der Technik zu überwinden und einen einfachen und preisgünstigen Betrieb der der Ventilanordnung zu ermöglichen.

Diese Aufgabe wird durch eine Ventilanordnung gemäß dem Hauptanspruch bzw. einem der Unteransprüche gelöst.

Eine erfindungsgemäße Ventilanordnung umfasst ein Ventilgehäuse, in dem ein Führungskanal ausgebildet ist, einen in dem Führungskanal längs geführten Stößel und einen vorzugsweise mechanischen Aktor. Jeweils ein Führungskanal und ein Stößel gehören zu einem Ventil. Die Ventilanordnung umfasst dabei mindestens ein Ventil, regelmäßig aber mehrere Ventile. In der Ventilanordnung können die Ventile in einem gemeinsamen Ventilkörper ausgebildet sein oder jeweils eigene Ventilkörper aufweisen..

Der Aktor dient zur Auslenkung der Stößel, indem er an einem ersten Ende des Stößels angreift, so dass sich ein stirnseitiger Abschnitt an einem gegenüberliegenden zweiten Ende des Stößels in einem Bewegungsbereich des Führungskanals hin und her bewegen kann. Der Aktor kann beispielsweise hydraulisch oder pneumatisch angetrieben sein. Als mechanischer Aktor kann beispielsweise ein Steuerrad oder eine Steuerwalze mit Kulissenbahnen dienen. Jedem Ventil kann eine Kulissenbahn zugeordnet sein, die auf unterschiedlichen Radien eines Steuerrades oder unterschiedlichen, einander nicht überlappenden Umfangslinien einer Steuerwalze angeordnet sein. Ein Steuerrad und eine Steuerwalze mit Kulissenführung sind in der Anmeldung mit der Anmeldenummer 102017220143.6 desselben Anmelders mit dem 13.11.2017 als Anmeldetag ausführlich beschrieben und werden insoweit auch zum Inhalt der vorliegenden Anmeldung gemacht.

Der Bewegungsbereich ist der durch die beiden Endstellungen des sich bewegenden Stößels begrenzte Bereich des Führungskanals, in dem eine Stirnseite des Stößels verfahren wird. Für die Längsbewegung zwischen beiden Endstellungen des Stößels sorgt der Aktor.

Die erfindungsgemäße Ventilanordnung ist dadurch gekennzeichnet, dass sie eine Messeinheit mit einem kapazitiven und/oder induktiven Sensor umfasst, welche an dem Bewegungsbereich angeordnet ist. Diese Anordnung ist solcherart, dass bei einer Bewegung des Stößels dessen stirnseitiger Abschnitt, also derjenige Bereich des Stößels, der dem Aktor gegenüberliegt, in seinem Bewegungsbereich in den sensitiven Bereich des Sensors eindringt und dadurch in dem Sensor ein Signal erzeugt. Im Vergleich zu einem toleranzbehafteten und dem Verschleiß unterliegenden Mikroschalter ist eine solche Ventilanordnung mit einer erfindungsgemäßen elektronischen Erfassung genauer und robuster.

Die Sensoren der Messeinheit sind am Ventil nicht an der Seite des Aktors angeordnet, sondern bezüglich des Stößels auf dessen dem Aktor gegenüberliegenden Seite. Dies ermöglicht neben einem leichten Austausch und einer einfachen Wartung des Sensors auch eine direkte Messung desjenigen Bereichs, der für die Funktionsweise der Ventilanordnung besonders wichtig ist. Es kann jedes Ventil der Ventilanordnung mit einer Messeinheit bzw. einem Sensor ausgestattet sein oder nur einzelne Ventile.

Besteht der Stößel aus Metall, kann er durch den jeweiligen Sensor besonders gut detektiert werden. Bevorzugt kann der Stößel aus Kunststoff ausgebildet sein und zumindest sein stirnseitiger Abschnitt ein magnetisches oder magnetisierbares Metall, einen Magneten, einen elektrisch leitenden Kunststoff oder ein Dielektrikum enthalten. Damit kann der Stößel ein geringeres Gewicht aufweisen, was seiner leichteren Betätigung zugutekommt, und dennoch gut zu detektieren sein.
Kapazitive Sensoren umfassen meist Elektroden. Bei einer Verwendung eines kapazitiven Sensors umfasst die Messeinheit bevorzugt einen Kondensator, der besonders bevorzugt als Abstandssensor oder Näherungssensor ausgestaltet ist.

Induktive Sensoren umfassen in der Regel Drahtschlaufen. Bei einem Einsatz eines induktiven Sensors kann die Messeinheit erfindungsgemäß eine Spule oder einen Hall-Sensor umfassen, wobei der Stößel in diesem Falle insbesondere ein magnetisches und/oder magnetisiertes Material umfasst, welches dazu ausgelegt ist, in dem Sensor ein Signal zu erzeugen.

Es kann je nach Anwendungsfall auch vorteilhaft sein, einen (oder mehrere) induktive(n) und einen (oder mehrere) kapazitive(n) Sensor(en) gemeinsam zu verwenden Die Vorteile einer Kombination induktiver und kapazitiver Sensoren kann eine bessere Fehlerunterdrückung sein, da induktive Fehlerquellen in der Regel nicht kapazitiv wirken und umgekehrt. Eine Kombination von mehreren gleichartigen oder unterschiedlichen Sensoren kann außerdem den Messbereich vergrößern.

Bevorzugt ist bei einer Ventilanordnung ein Sensor an oder in der Außenwandung des Ventilgehäuses angebracht, bzw. um die Außenwandung des Ventilgehäuses gewickelt, so dass er im Wesentlichen spaltfrei an einer den Bewegungsbereich umgebenden Wandung unmittelbar anliegt. Die Bezeichnung "im Wesentlichen spaltfrei" bedeutet, dass sich kein Spalt zwischen Wandung und Sensor befindet, zumindest bezüglich des größten Teils der Sensorfläche, da ein solcher das detektierte Signal verschlechtern würde. Der Sensor kann mittels Verklebung oder mittels des Anpressdrucks einer elastischen Fixierung oder Umhüllung befestigt sein, z.B. mittels eines Montageringes. Alternativ kann der Sensor in dem Gehäuse untergebracht sein, beispielsweise in einen Schlitz im Gehäuse eingeschoben und dort befestigt. Gleichwohl kann er von außen zugänglich sein, was seinen Austausch oder seine Wartung sehr vereinfacht.

Der Sensor befindet sich also außerhalb jeder Feuchtigkeitseinwirkung und sonstiger Umgebungseinflüsse. Er erhält dadurch eine robuste und zuverlässige Konstruktion. Mangels Eingriff in den Fluidstrom unterliegt er erst recht keinerlei Verkalkung.

Ein kapazitiver Sensor weist in der Regel Elektroden auf. Diese Elektroden sind im Sinne der vorgenannten Ausführungsform so gestaltet, dass sie sich, ggf. von einem Isolator umhüllt, an die Wandung des Ventilgehäuses an der Position eines Bewegungsbereichs schmiegen und diese zumindest teilweise umgreifen. Alternativ können sie in Schlitzen in der Wandung des Ventilgehäuses verlaufen, deren innere Schlitzwand die den Bewegungsbereich umgebenden Wandung darstellt. Für ein optimales Signal können sich die Elektroden durch elastische Streifen oder Keile unterstützt an die innere Schlitzwand schmiegen.

Ein induktiver Sensor weist dieser in der Regel eine leitende Spule auf. Die Spule ist im Sinne der vorgenannten Ausführungsform so gestaltet, dass sie sich, bevorzugt von einem Isolator umhüllt, an die Wandung des Ventilgehäuses an der Position eines Bewegungsbereichs schmiegt und sie um die Längsachse des Führungskanals herum umschließt. Alternativ kann sie in kreisförmigen oder spiralförmigen Schlitzen in der Wandung des Ventilgehäuses verlaufen.

Bevorzugt ist die Messeinheit so ausgestaltet, dass mindestens eine Endstellung des Stößels und bevorzugt auch mindestens eine weitere Auslenkposition des Stößels jenseits der Endstellung detektierbar sind. Eine solche Detektion kann mit einem bezüglich der Längsachse des betreffenden Führungskanals räumlich ausgedehnten Sensors erfolgen oder mit einer Anzahl räumlich geringer ausgedehnter Sensoren, die nebeneinander angeordnet sind. Taucht der Stößel mit seinem stirnseitigen Abschnitt in den sensitiven Bereich eines Sensors ein, wird in ihm ein Signal erzeugt, welches abhängig von der Eindringtiefe des Stößels in den sensitiven Bereich ist. Ist der sensitive Bereich des Sensors mit Material komplett ausgefüllt, ändert sich das Signal in der Regel jedoch nicht mehr, es sei denn, das Stößelmaterial weist Inhomogenitäten auf. Ein räumlich weiter ausgedehnter Sensor wird damit einen größeren Bewegungsbereich des Stößels detektieren können als ein Sensor mit einer geringeren räumlichen Ausdehnung. Es kann jedoch auch Vorteile haben, eine Anzahl kleinerer Sensoren nebeneinander anzuordnden, z.B. zur Unterdrückung von Störsignalen.

Als Endstellung des Stößels wird jeweils diejenige Stellung verstanden, die der Stößel an der jeweiligen Position seiner Maximalverschiebung annimmt. Eine der beiden Endstellungen ist in der Regel diejenige, bei der das Ventil ein Fluid durchlässt, die andere diejenige, die den Durchfluss sperrt. Es ausreichen, die Durchlass-Endstellung zu detektieren oder die Sperr-Endstellung, günstiger Weise werden beide erfasst. Die Detektion einer dazwischen liegenden Position ist insbesondere für eine weiter unten beschriebene Druckmessung von Vorteil.

Eine elektronische Erfassung durch die Messeinheit der Erfindung ist in der Regel sensibler ausgestaltet als eine mechanische Erfassung, z.B. durch einen toleranzbehafteten und dem Verschleiß unterliegenden Mikroschalter. Die mechanische Umsetzung der Betätigung des Stößels bzw. anderer mechanisch gekoppelten Teile kann aufgrund der im Vergleich zu einem mechanischen Sensor genaueren und schnelleren Erkennung zudem kleiner realisiert werden. Die Anordnung der Sensoren der Messeinheit erlaubt daher mehr Funktionalität auf gleichem bzw. kleinerem Bauraum.

Bevorzugt umfasst eine erfindungsgemäße Ventilanordnung eine mechanische Feder im Ventilkörper, deren Auslenkung durch eine Längsverschiebung des Stößels verändert wird. Dies hat den Vorteil, dass die Stößel unabhängig von und auch entgegen der Schwerkraftwirkung elastisch in eine Endstellung vorgespannt sind. Bevorzugt ist die Feder so angeordnet, dass sie den Stößel in Richtung des Aktors, z.B. des Steuerrades, drückt. Dadurch braucht der Aktor nur eine Kraft entgegen der Federkraft auf den Stößel auszuüben, um ihn auszulenken, während die in der Gegenrichtung wirkende Federkraft für eine dauernde Anlage des Stößels am Aktor sorgen kann. Damit lässt sich eine Koppelung zwischen dem Aktor und dem Stößel konstruktiv vereinfachen.

Der Aktor kann den Stößel in eine Endstellung bzw. Position schieben, in der das Ventil öffnet und Fluid passieren lässt. Die Feder wirkt dann in Richtung der entgegengesetzten Position, in der das Ventil sperrt, oder umgekehrt. Insbesondere mit einer oben beschriebenen Steuerwalze oder einem Steuerrad als Aktor kann die Feder den Stößel gemäß einer weiteren vorteilhaften Ausführungsform zwar in die Richtung einer Position drücken, wobei der Stößel aber bei Einnahme dieser Position keinen zwingenden Kontakt zum Aktor aufweisen muss. Erreicht der Stößel also eine bestimmte Auslenkung, drückt ihn die Feder nicht weiter in Richtung des Aktors. Vielmehr kann der Stößel ein gewisses planmäßiges Spiel gegenüber dem Aktor haben, um dessen Bewegung zum Beispiel in seiner inaktiven Sperrstellung nicht unnötig zu behindern. Dadurch kann Reibung zwischen dem Stößel und dem Aktor reduziert oder vermieden werden, was zu einer energiesparenden Betriebsweise des Aktor beitragen kann.

Bei einer oben beschriebenen Steuerwalze oder einem Steuerrad als Aktor ist regelmäßig die Stellung des Aktors von Interesse. Dafür kann ein eigener Positionssensor zum Einsatz kommen. Nach einer weiteren vorteilhaften Ausgestaltung der Erfindung kann die Ventilanordnung stattdessen einen Detektierstößel umfassen, dessen Auslenkung von der Messeinheit gemessen wird und dessen Stößelposition zumindest über einen gewissen Bewegungsbereich des Aktors eine eineindeutige Zuordnung zur Aktorposition erlaubt. Vorzugsweise kann die Änderung der Position bzw. der Längsverschiebung des Detektierstößels über eine gleichmäßige Bewegung des Aktors hinweg konstant sein. Dies ist beispielsweise erfüllt, wenn eine auf einem Steuerrad angeordnete Kulissenbahn zumindest über einen Winkelbereich des Steuerrades eine Steigung ungleich Null aufweist, womit der ihr zugeordnete Stößel eine kontinuierliche Längsverschiebung erfährt. Jeder Position des Stößels auf seinem Bewegungsweg ist folglich genau eine Verdrehposition des Steuerrads zugeordnet. Ist also die Steigung der Kulissenbahn konstant, so wird der Stößel bei einer konstanten Winkelgeschwindigkeit des Steuerrades mit einer konstanten Geschwindigkeit ausgelenkt. Durch Detektion der Position des Detektierstößels kann die Position des Steuerrads) in dem betreffenden (Winkel-)Bereich bestimmt werden. Der Detektierstößel kann somit die Anordnung eines Positionssensors am Aktor erübrigen und sogar ggf. eine weitere Funktion im Ventil ausüben. Die Auslenkung des Detektierstößels kann zudem stellvertretend für eine Auslenkung einer Gruppe von Stößeln erfasst werden, da über die bekannte Form der Kulissenbahnen die Auslenkung jedes Stößels bei einer bestimmten Position des Steuerrades hergeleitet werden kann. Statt einer Ausstattung jedes Ventils mit einer Messeinrichtung oder zumindest mit einem Sensor braucht folglich nur noch ein bzw. der Detektierstößel mit einer Messeinrichtung versehen zu werden.

Als Detektierstößel kann also nur ein Stößel, ggf. mit einer Ventilfunktion, oder auch eine Stößelgruppe angesehen werden, beispielsweise für unterschiedliche Winkelbereiche der Steuerungsbewegung des Aktors. Wichtig ist nur, dass sich aus der Position des Stößels bzw. aus der Konfiguration der Stößelpositionen der Stößelgruppe eindeutig Rückschlüsse auf die Position des Aktors ziehen lassen, bzw. eine bestimmte Stößelposition bzw. Konfiguration einer Stößelgruppe nur bei einer einzigen Position des Aktors auftritt.

Ein erfindungsgemäßes Messverfahren zur Messung des Fluiddrucks eines Ventils in einer erfindungsgemäßen Ventilanordnung läuft in den folgenden Schritten ab:
Zunächst erfolgt ein erstes Messen der Position des Stößels bei geöffnetem Ventil während eines ersten Druckzustands. Danach wird der Druckzustand des Ventils geändert und es erfolgt ein zweites Messen der Position des Stößels bei geöffnetem Ventil während eines zweiten Druckzustands. Zuletzt wird der Fluiddruck basierend auf den Werten der ersten und der zweiten Messung berechnet. Der Stößel hat dabei bei geöffnetem Ventil einen Bewegungsspielraum zumindest in Richtung des Aktors, da er ansonsten durch den anliegenden Druck nicht heruntergedrückt werden könnte. Beispielsweise kann dies erreicht werden, indem die Feder den Stößel nicht ganz in eine Kulissenbahn herunter drückt da diese an einer Messposition des Drucks auf dem Steuerrad besonders tief gestaltet ist. Bevorzugt ist der erste Druckzustand drucklos und der zweite Druckzustand entspricht einem dazu abweichenden Betriebsdruck oder umgekehrt. Damit kann eine zusätzliche indirekte Messung des Fluiddruckes durch Messung der Auslenkungsdifferenz des drucklosen und des druckbeaufschlagten Ventils gegen die bekannte Gegenkraft der Feder realisiert werden.

Bei einer Kombination der oben beschriebenen Messung der Stellung des Aktors und einer Konfiguration für eine oben beschriebene Druckmessung lassen sich sowohl der Fluiddruck als auch die Position und Geschwindigkeit des Aktors alleine mit der vorliegenden Ventilanordnung bestimmen. Es sind damit keine weiteren Sensoren außer denen in der Messeinheit notwendig.

Ein weiterer Aspekt der Erfindung ist ein Getränkeautomat, insbesondere ein Kaffeevollautomat, welcher eine erfindungsgemäße Ventilanordnung umfasst oder zur Durchführung des erfindungsgemäßen Messverfahrens ausgestaltet ist.

Ein wichtiger Vorteil der Erfindung ist, dass keine mechanische Belastung des Sensors auftritt und somit die Komponenten zur Zustandserkennung eine längere Lebensdauer haben. Zudem bestehen dadurch geringere mechanische Anforderungen an die Materialien, was sich positiv auf den Preis und den Aufwand für die Anbringung des Sensors auswirkt. Darüber hinaus ist der Sensor kontaktlos und hat somit keinen Einfluss auf das Fluidsystem.

Mit einer erfindungsgemäßen Zustandserkennung können auch Zwischenstellungen der Ventilanordnung detektiert werden. Damit können Defekte und Fehlfunktionen z.B. durch Verschmutzung oder Verkalkung erkannt werden. Dadurch kann der Benutzer auf eine notwendige Entkalkung hingewiesen und ein Kundendienstbesuch dadurch vermieden werden. Außerdem können mit einer genauen Zustandserkennung gezielt verschiedene Schaltwege eines Ventils realisiert werden.

Ein weiterer Vorteil der Erfindung ist, dass eine Aussage über ein eventuelles Eintreten von Alterung bzw. Verschleiß der Ventilanordnung erkannt und berücksichtigt werden kann z.B. bei der Positionierung des Stößels.

Das Prinzip der Erfindung wird im Folgenden anhand einer Zeichnung beispielshalber noch näher erläutert. In der Zeichnung zeigen:
Figur 1: Eine perspektivische Darstellung einer bevorzugten Ausführungsform der Erfindung.
Figur 2: Ein Detail der Ventilanordnung.
Figur 3: Eine Draufsicht auf die Ventilanordnung.
Figur 4: Eine Schnittdarstellung der Ventilanordnung.

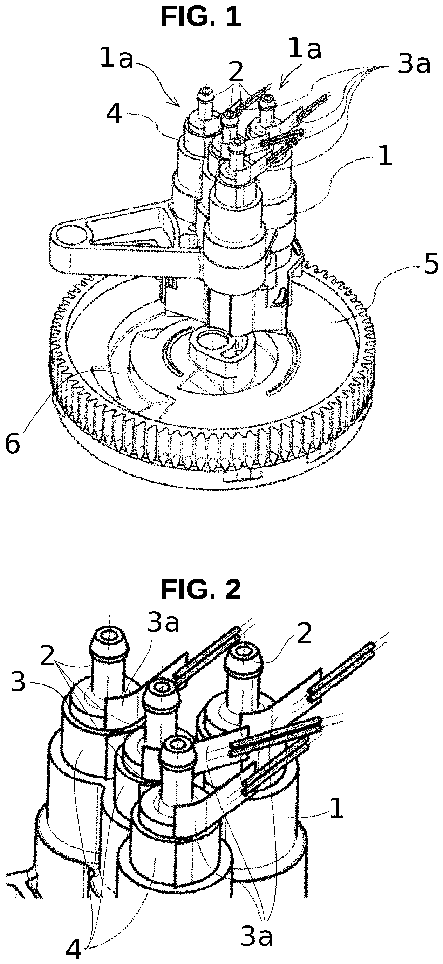

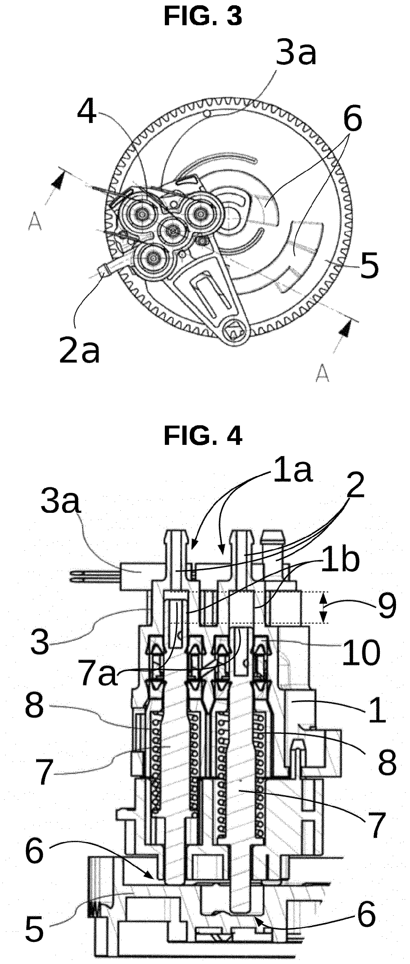

Figur 1 zeigt eine erfindungsgemäße Ventilanordnung in einer perspektivischen Darstellung. Sie umfasst vier Ventile 1a - der Übersichtlichkeit zuliebe sind nur zwei Ventile 1a mit Bezugszeichen versehen -, die in einem gemeinsamen Ventilkörper 1 zusammenfasst sind. Oberseitig trägt jedes Ventil 1a einen Anschluss 2, durch den ein Fluid aus dem Ventil 1a ausströmen kann. Knapp unterhalb der Anschlüsse 2 ist an jedem der Ventile 1a eine Messeinheit 3a mittels eines elastischen Montagerings 4 befestigt. Die Messeinheiten 3a könnten dabei induktiv oder kapazitiv wirken. Das Öffnen und Schließen der Ventile 1a wird durch ein Stößelrad oder Steuerrad 5 mit ringförmigen Kulissenbahnen 6 als mechanischem Aktor gesteuert. Der Abstand des Steuerrades 5 zum Ventilkörper 1 ist konstant. Durch die Drehung des Steuerrades 5 bewegen sich die im Steuerrad 5 eingebrachten Kulissenbahnen 6 unter jedem Ventil 1a hindurch und damit auch unter den im Steuerrad 5 laufenden Stößeln 7 (s. Fig. 4).

Figur 2 zeigt den oberen Teil des Ventilkörpers 1 mit den Anschlüssen 2 der vier Ventile 1a und den in der Nähe der Anschlüsse 2 angebrachten Messeinheiten 3a. Die Messeinheiten 3a sind an der Außenseite jedes Ventilkörpers 1 mittels der elastischen Montageringe 4 befestigt. Dabei umfassen die Messeinheiten 3a Sensoren 3, die sich in der Darstellung unter den Montageringen 4 befinden, und fahnenartige Anschlussstrukturen 3b. Die Montageringe 4drücken die Sensoren 3 spaltfrei an die Ventilkörper 1, um Verfälschungen der Messung durch Luftspalte auszuschließen. Die Anschlussstrukturen 3b dienen dem elektrischen Anschluss der Sensoren 3 an ein nicht dargestelltes Messsystem und ragen dazu über den Montageringen 4 heraus.

Figur 3 zeigt eine Draufsicht auf die Ventilanordnung. Darin sind die ringförmigen und konzentrischen Kulissenbahnen 6 in dem Steuerrad 5 zu erkennen. Die Kulissenbahnen 6 verlaufen in unterschiedlichen Radien und steuern damit unterschiedliche Stößel 7. Zur Linken ragt ein weiterer Anschluss 2a als Fluideinlass aus dem Ventilkörper 1 hinaus.

Figur 4 zeigt eine Schnittdarstellung der bevorzugten Ventilanordnung entlang der Schnittebene A-A der Figur 3. Neben den bereits in den übrigen Figuren dargestellten Elementen Ventilkörper 1, Anschlüsse 2, Sensoren 3 mit Montageringen 4 und Steuerrad 5 mit Kulissenbahnen 6 sind hier zusätzlich die inneren Komponenten der Ventile 1a, nämlich die Stößel 7 mit ihren stirnseitigen Abschnitten 7a in den Führungskanälen 1b, zylindrische Federn 8 um die Stößel 7 herum, Bewegungsbereiche 9 der stirnseitigen Abschnitte 7a und Dichtungen 10 zwischen den Stößeln 7 und dem Ventilgehäuse 1 zu erkennen. Die in den Führungskanälen 1b geführten Stößel 7 werden durch die Federn 8 abwärts gegen das Steuerrad 5 gedrückt, wo sie in den Kulissenbahnen 6 laufen. Die Tiefe der jeweiligen Kulissenbahn 6 bestimmt damit die Auslenkung eines jeden Stößels 7. Bei einer Drehung des Steuerrades 5 bewegen sich die unterschiedlich ausgeformten Höhenprofile der Kulissenbahnen 6 unter den Stößeln 7 vorbei und lassen sie je nach Höhenprofil der Kulissenbahnen 6 durch die Federn 8 nach unten auslenken oder drückt sie nach oben.

Wird ein Stößel 7 durch das Steuerrad 5 weit genug nach oben gedrückt, so dass er sich mit dem oberen stirnseitigen Abschnitt 7a weit genug in den Bewegungsbereich 9 hineinragt, dringt der betreffende stirnseitige Abschnitt 7a dadurch in den sensitiven Bereich des Sensors 3 ein und erzeugt in ihm entsprechend der Eindringtiefe ein Signal. Das Signal entsteht vollkommen kontaktfrei gegenüber dem Stößel 7, ohne Eingriff in den Fluidstrom zwischen den Anschlüssen 2 und 2a und kann mit einer Elektronik verarbeitet werden.

Da es sich bei den vorhergehenden, detailliert beschriebenen Ausführungsformen um Beispiele handelt, können sie in üblicher Weise vom Fachmann in einem weiten Umfang modifiziert werden, ohne den Bereich der Erfindung zu verlassen. Insbesondere können auch die konkreten Ausgestaltungen der Ventilanordnung in anderer Form als in der hier beschriebenen folgen. Ebenso kann die Ventilanordnung in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Ventilgehäuse
- 1a: Ventil
- 1b: Führungskanal
- 2, 2a: Anschluss
- 3: Sensor
- 3a: Messeinheit
- 3b: Anschlussstrukturen
- 4: Montagering
- 5: Steuerrad
- 6: Kulissenbahn
- 7: Stößel
- 7a: Stirnseitiger Abschnitt
- 8: Feder
- 9: Bewegungsbereich
- 10: Dichtung

## Patentansprüche

1. Ventilanordnung mit einem Ventilgehäuse (1) in dem ein Führungskanal (1b) ausgebildet ist und einem in einem Führungskanal (1b) längs geführten Stößel (7), und einem Aktor (5; 6) zur Auslenkung des Stößels (7), der an einem ersten Ende des Stößels (7) angreift, so dass sich ein stirnseitiger Abschnitt (7a) an einem gegenüberliegenden zweiten Ende des Stößels (7) in einem Bewegungsbereich (9) des Führungskanals (1b) hin und her bewegen kann, **dadurch gekennzeichnet, dass** die Ventilanordnung eine Messeinheit (3a) mit einem kapazitiven und/oder induktiven Sensor (3) umfasst, welche an dem Bewegungsbereich (9) angeordnet ist, so dass bei einer Bewegung des Stößels (7) dessen stirnseitiger Abschnitt (7a) im Bewegungsbereich (9) in den sensitiven Bereich des Sensors (3) eindringt und dadurch in dem Sensor (3) ein Signal erzeugt.

2. Ventilanordnung nach Anspruch 1, **dadurch gekennzeichnet, dass** zumindest der stirnseitige Abschnitt (7a) ein magnetisches oder magnetisierbares Metall, einen Magneten, einen elektrisch leitenden Kunststoff oder ein Dielektrikum enthält.

3. Ventilanordnung nach einem der vorangehenden Ansprüche, **gekennzeichnet durch** einen kapazitiven Sensor (3) mit einem Kondensator, der bevorzugt als Abstandssensor oder Näherungssensor ausgestaltet ist

4. Ventilanordnung nach einem der vorangehenden Ansprüche, **gekennzeichnet durch** einen induktiver Sensor (3) mit einer Spule oder einem Hall-Sensor, wobei der Stößel (7) ein magnetisches und/oder magnetisiertes Material umfasst, welches dazu ausgelegt ist, in dem Sensor (3) ein Signal zu erzeugen.

5. Ventilanordnung nach einem der vorangehenden Ansprüche, **dadurch gekennzeichnet, dass** der Sensor (3) an oder in der Außenwandung des Ventilgehäuses (1) angebracht, insbesondere um die Außenwandung des Ventilgehäuses (1) herum gewickelt ist, so dass er im wesentlichen spaltfrei an einer den Bewegungsbereich umgebenden Wandung anliegt.

6. Ventilanordnung nach einem der vorangehenden Ansprüche, **dadurch gekennzeichnet, dass** die Messeinheit (3a) so ausgestaltet ist, dass mindestens eine Endstellung und mindestens eine weitere Auslenkposition des Stößels (7) jenseits der Endstellung detektierbar sind.

7. Ventilanordnung nach einem der vorangehenden Ansprüche, **gekennzeichnet durch** eine mechanische Feder (8) im Ventilkörper (1), deren Auslenkung durch eine Längsverschiebung des Stößels (7) veränderbar ist.

8. Ventilanordnung nach einem der vorangehenden Ansprüche, **dadurch gekennzeichnet, dass** sie einen Detektierstößel umfasst, dessen Auslenkung von der Messeinheit (3a) gemessen wird, und dessen auf dem Aktor (5), bevorzugt einem Steuerrad (5), zugeordnete Kulissenführung (6), bevorzugt eine Kulissenbahn (6), zumindest über einen Winkelbereich des Aktors (5) eine Steigung ungleich Null aufweist.

9. Messverfahren zur Messung des Fluiddrucks eines Ventils (1a) in einer Ventilanordnung nach einem der vorangehenden Ansprüche, **gekennzeichnet durch** die Schritte:
- erstes Messen der Position des Stößels (7) bei geöffneten Ventil (1a) während eines ersten Druckzustands,
- Ändern des Druckzustands des Ventils (1a),
- zweites Messen der Position des Stößels (7) bei geöffneten Ventil (1a) während eines zweiten Druckzustands,
- Berechnen des Fluiddrucks basierend auf den Werten der ersten und der zweiten Messung,
wobei der Stößel (7) bei geöffneten Ventil (1a) einen Bewegungsspielraum zumindest in Richtung des Aktors (5; 6) hat, und wobei bevorzugt der erste Druckzustand drucklos ist und der zweite Druckzustand einem Betriebsdruck entspricht oder umgekehrt.

10. Getränkeautomat, insbesondere Kaffeevollautomat, umfassend eine Ventilanordnung nach einem der Ansprüche 1 bis 8 oder welcher zur Umsetzung eines Messverfahrens gemäß Anspruch 9 ausgestaltet ist.
